(19) Europäisches Patentamt
European Patent Office
Office européen des brevets

(11) Veröffentlichungsnummer: **0 355 654 B1**

(12) **EUROPÄISCHE PATENTSCHRIFT**

(45) Veröffentlichungstag der Patentschrift: **10.02.93**

(51) Int. Cl.5: **C09D 5/44**, C08G 59/50, C08L 63/00

(21) Anmeldenummer: **89115007.0**

(22) Anmeldetag: **14.08.89**

(54) **Kathodisch abscheidbare Lackbindemittel und Verfahren zu ihrer Herstellung.**

(30) Priorität: **18.08.88 AT 2046/88**

(43) Veröffentlichungstag der Anmeldung:
**28.02.90 Patentblatt 90/09**

(45) Bekanntmachung des Hinweises auf die Patenterteilung:
**10.02.93 Patentblatt 93/06**

(84) Benannte Vertragsstaaten:
**BE DE ES FR GB IT NL SE**

(56) Entgegenhaltungen:
**EP-A- 0 193 102**
**EP-A- 0 200 397**
**FR-A- 2 290 466**
**FR-A- 2 362 195**
**US-A- 4 246 148**

(73) Patentinhaber: **Vianova Kunstharz Aktiengesellschaft**

**A-8402 Werndorf(AT)**

(72) Erfinder: **Schipfer, Rudolf, Dr.**
**Ernst Haeckelstrasse 53**
**A-8010 Graz(AT)**
Erfinder: **Schmölzer, Gerhard, Dr.**
**Eisteichgasse 27**
**A-8010 Graz(AT)**
Erfinder: **Monschein, Günther**
**Grünäckerweg 4**
**A-8401 Kalsdorf(AT)**
Erfinder: **Meglitsch, Gerhard**
**Zerlacherweg 5**
**A-8053 Graz(AT)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

## Beschreibung

Die Erfindung betrifft kathodisch abscheidbare Lackbindemittel auf Basis von modifizierten Epoxidharz-Amin-Addukten sowie das Verfahren zu ihrer Herstellung.

Das Verfahren der Elektrotauchlackierung verlangt von den dafür optimierten Bindemitteln in den verschiedenen Verfahrensstufen, wie Lackherstellung, elektrische Abscheidung, Einbrennprozeß sowie zur Erzielung der Filmeigenschaften, wie Oberflächenbeschaffenheit, Umgriff und Korrosionsfestigkeit, in vielen Fällen völlig gegenläufige Eigenschaften. Verschiedene andere Forderungen der Verbraucher, wie niedriger Gehalt an organischen Lösemitteln oder Beschränkungen in der Auswahl der weiteren Lackkomponenten, müssen überdies berücksichtigt werden.

So sollen die Bindemittel auch bei geringen Anteilen von organischen Lösemitteln eine niedrige Viskosität aufweisen, damit ein günstiges Verdünnungsverhalten, auch beim Nachsetzvorgang in der Elektrotauchanlage, sowie eine gute Pigmentierbarkeit erzielt werden.

Andererseits ist ein hohes Molekulargewicht eine Voraussetzung zur Erzielung guter Beständigkeitseigenschaften der vernetzten Filme, was jedoch üblicherweise mit einer hohen Viskosität des Bindemittels verbunden ist. Ähnlich gegensätzliche Forderungen bestehen hinsichtlich der Ausbildung eines hohen elektrischen Filmwiderstandes bei der Abscheidung zur Erzielung eines hohen Umgriffs und dem gleichzeitigen Wunsch nach hohen Filmschichtstärken mit exzellenter Flächenqualität.

Aus der Literatur sind viele Versuche bekannt, einen Kompromiß zwischen der optimalen Löslichkeit bzw. Dispergierbarkeit der protonisierten Bindemittel und ihrer Abscheidungscharakteristik bzw. den Eigenschaften der vernetzten Lackfilme durch mannigfache Modifizierung von Bisphenol A- oder Phenolnovolak-Epoxidharz-Amin-Addukten zu finden.

So wird beispielsweise in der US-PS 4,104,147 oder der US-PS 4,148,772 das Epoxidharz auf Basis von Bisphenol A vor der Umsetzung mit dem Amin mit einem Polytetramethylenglykol unter Kettenverlängerung reagiert und damit ein hydrophiles Segment eingebaut. Auch in den US-PS 3,839,252 oder 4,035,275 wird eine solche Kettenverlängerung mit Polypropylenglykol vor der Umsetzung mit dem Amin vorgeschlagen. Ein anderer Weg zur Einführung von Polyalkylenglykolsegmenten besteht gemäß EP-A2-00 74 634 in der Kettenverlängerung bei niedrigmolekularen Bisphenol-A-Epoxidharzen mit Bisphenol-A-Ethylenoxid-Addukten.

Ein wesentlicher Nachteil dieser Methode liegt in der mangelhaften Kontrollierbarkeit solcher kettenverlängernden Reaktionen, da dabei auch Eigenkondensationen des Epoxidharzes nicht auszuschließen sind. Auch wenn die Vorprodukte den theoretischen Epoxidwert aufweisen, ist das Vorhandensein freier Polyglykole nicht auszuschließen, was zu einer wesentlichen Beeinflussung verschiedenster Bindemitteleigenschaften führt.

Als extrem gut wasserlöslich erweisen sich protonisierte Epoxid-Amin-Addukte auf Basis von Polyoxyalkylenglycidylethern, wie sie beispielsweise in der US-PS 4,035,275 angeführt sind. Diese Produkte sind jedoch nur schwierig in Form brauchbarer Filme elektrisch abzuscheiden und zeigen auch hinsichtlich ihrer Beständigkeitseigenschaften erwartungsgemäß große Mängel.

Bei pH-Werten über 7 in Wasser lösliche kationisch modifizierte Epoxidharze können durch Einbau von quaternären Ammoniumgruppen, d. h. durch Reaktion der Epoxidgruppen mit tertiären Aminen in Gegenwart von Säuren und/oder Wasser, erhalten werden. Produkte dieser Art, wie sie beispielsweise in der US-PS 4,035,275 beschrieben sind, haben sich in der Praxis nur bei Vorliegen geringer Anforderungen als Alleinbindemittel für geeignet erwiesen und werden gegebenenfalls als Zusatzbindemittel eingesetzt.

In der AT-PS 381 115 wird der Einbau von Polyoxyalkylsegmenten in Epoxid-Amin-Addukte durch Reaktion der Epoxid-Amin-Addukte mit Polyoxyalkylenglycidylethern beschrieben. Neben dieser die Löslichkeit und Dispergierbarkeit der partiell neutralisierten Polymeren verbessernden Maßnahme müssen zur ausreichenden Flexibilisierung der Polymere entsprechende Modifikatoren eingebaut werden. Produkte ohne ausreichende Plastifizierung besitzen hohe Glasübergangstemperaturen und ein mangelhaftes Fließverhalten der Naßfilme im Einbrennbereich von 120 bis 180 °C. Starke Mängel im "Verlauf" und geringe Schichtstärken der Filme sind die Folge.

Zur Elastifizierung können Epoxidharze oder epoxyfunktionelle Epoxid-Amin-Addukte mit epoxidreaktiven Verbindungen defunktionalisiert werden. Dies kann durch Monocarboxylverbindungen wie Monocarbonsäuren verschiedener Kettenlänge oder Monoestern von Dicarbonsäuren, durch längerkettige Dicarbonsäuren, wie Adipinsäure und deren höhere Homologe sowie dimerisierte Fettsäuren und ähnliche erfolgen. In geringem Umfang können zu diesem Zweck auch Polycarboxylverbindungen, wie maleinisierte Öle oder Polybutadiene herangezogen werden. Auch eine Defunktionalisierung mit Carboxylgruppen tragenden Polyestern, die gegebenenfalls mit Fettsäuren modifiziert sein können, ist anwendbar. Daneben ist eine Plastifizierung des Polymeren durch Reaktion eines Epoxid- Amin-Adduktes mit Monoglycidylethern oder

-estern möglich.

Alle diese Modifikationsmöglichkeiten zeigen in der Praxis mit steigendem Modifizierungsgrad Nachteile, wie Abnahme des Naßfilmwiderstandes und der Spannungsfestigkeit und damit verbunden eine Verschlechterung im Umgriffsverhalten, das Auftreten von Spaltprodukten beim Einbrennen der abgeschiedenen Filme, verminderte Beständigkeitseigenschaften der eingebrannten Filme und Verschlechterung ihrer Haftung zu Folgeschichten.

Es wurde nun gefunden, daß eine optimale Anpassung der Bindemittel an die divergierenden Forderungen der Praxis durch eine Modifizierung der Epoxidharz-Amin-Addukte mit spezifisch aufgebauten Diaminbrücken möglich ist.

Die Erfindung betrifft demgemäß kathodisch abscheidbare Lackbindemittel auf der Basis von modifizierten Epoxidharz-Amin-Addukten, welche dadurch gekennzeichnet sind, daß sie 5 bis 30 Gew.-%, vorzugsweise 10 bis 20 Gew.-%, bezogen auf das modifizierte Epoxidharz-Amin-Addukt, eines Modifikators der allgemeinen Formel

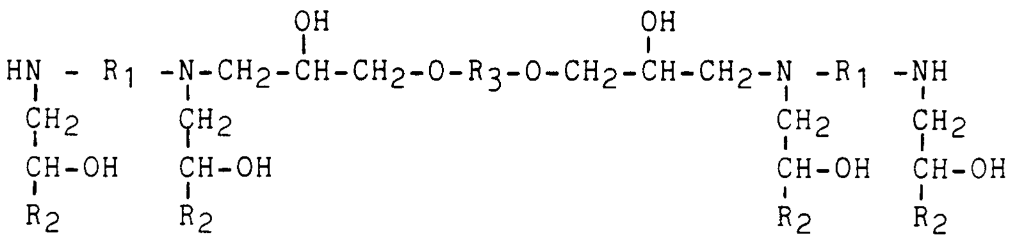

enthalten, wobei

$R_1$ gleiche oder verschiedene Reste $-C_nH_{2n}-$ oder
$-(C_nH_{2n}O)_m-C_nH_{2n}-$ oder

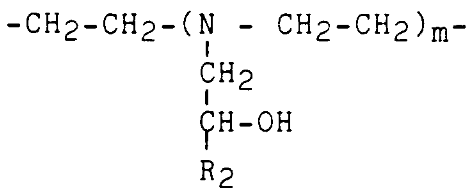

$R_2$ gleiche oder verschiedene Reste $-C_nH_{2n+1}$ oder
$-O-C_nH_{2n+1}$

$R_3$ einen Rest

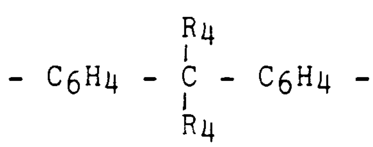

oder
$-(C_nH_{2n}O)_m-$ oder

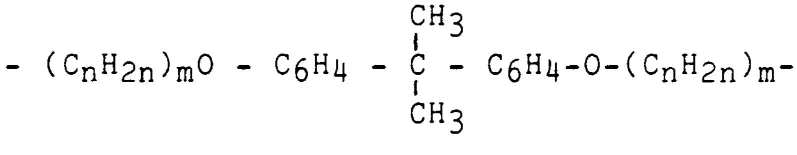

$R_4$ ein Wasserstoffatom oder einen Methylrest,

n und m ganze Zahlen zwischen 2 und 8 und im Falle von $R_2$ n zwischen 8 und 20 bedeuten, und

welcher mit mindestens 2 Mol eines Diepoxidharzes oder Polyepoxidharzes und primär-tertiären Diaminen und primären und/oder sekundären Alkyl- und/oder Alkanolaminen zu einem epoxidgruppenfreien, nach Neutralisation mit Säuren wasserverdünnbaren Epoxidharz-Amin-Addukt mit einem Molekulargewicht von 4000 - 16.000 (Gewichtsmittel) bzw. von 1.500 - 3.000 (Zahlenmittel), einer Glasübergangstemperatur von +20 bis +45°C und einer Aminzahl von mindestens 20 mg KOH/g umgesetzt wurde.

Die Erfindung betrifft weiters ein Verfahren zur Herstellung von kathodisch abscheidbaren Lackbindemitteln auf der Basis von modifizierten Epoxidharz-Amin-Addukten, welches dadurch gekennzeichnet ist, daß man

(A) ein diprimäres aliphatisches Di- oder Polyamin mit einer aliphatischen Monoglycidyl- und/oder Monoepoxidverbindung, deren aliphatischer Rest 8 bis 20 C-Atome aufweist, bei 40 - 60°C in Gegenwart eines reaktionsinerten Lösemittels in solchen Mengenverhältnissen umsetzt, daß das Reaktionsprodukt 2 sekundäre Aminogruppen aufweist,

(B) 2 Mol dieses Zwischenproduktes bei 40 - 80°C mit 1 Mol einer Diglycidylverbindung reagiert und

(C) 5 bis 30 Gew.-%, vorzugsweise 10 bis 20 Gew.-%, bezogen auf das modifizierte Epoxidharz-Amin-Addukt, dieses Modifikators (AB), welcher pro Molekül 2 sekundäre Aminogruppen, sowie eine Glasübergangstemperatur von weniger als -15°C aufweist mit Di- oder Polyepoxidharzen, sowie primär-tertiären Diaminen und primären und/oder sekundären Alkyl- und/oder Alkanolaminen zu einem epoxidgruppenfreien, nach Neutralisation mit Säuren wasserverdünnbaren Epoxidharz-Amin-Addukt mit einem Molekulargewicht von 4.000 - 16.000 (Gewichtsmittel) bzw. 1.500 - 3.000 (Zahlenmittel), einer Glasübergangstemperatur von +20 bis +45°C und einer Aminzahl von mindestens 20 mg KOH/g umsetzt.

Die Erfindung betrifft weiters die Verwendung der erfindungsgemäß hergestellten Bindemittel zur Formulierung von Elektrotauchlacken.

Durch den erfindungsgemäßen Aminmodifikator wird das Löslichkeitsverhalten und die Dispergierbarkeit des Bindemittels entscheidend verbessert, obwohl die Basizität des Modifikators allein nicht genügt, dem Endprodukt auch nach 100%iger Protonierung eine ausreichende Wasserverdünnbarkeit zu verleihen. Überdies werden durch diesen Modifikator ein gutes Umgriffsverhalten, sowie bei den eingebrannten Filmen eine Flexibilisierung bei hoher Schichtstärke, und, wegen der niedrigen Glasübergangstemperatur der hochmolekularen Polymeren, die Ausbildung störungsfreier Oberflächen erreicht.

Für die Herstellung der zur Kettenverlängerung der Epoxidharze dienenden Modifikatoren werden diprimäre aliphatische Diamine vom Typ des Ethylendiamins und seiner Homologen eingesetzt. Ebenso können auch Ethergruppen enthaltende Diamine, wie sie beispielsweise unter der Bezeichnung "JEFFAMIN" im Handel angeboten werden, eingesetzt werden. In gleicher Weise können auch diprimäre Polyamine, insbesonders das Diethylentriamin, verwendet werden.

Die genannten diprimären Amine werden in einer ersten Reaktionsstufe mit einer aliphatischen Monoglycidyl- oder Monoepoxidverbindung, deren aliphatischer Rest 8 bis 20 C-Atome aufweist, umgesetzt. Beispielsweise seien hier Alkylglycidylether, Olefinoxide, wie Dodecenoxid, oder Glycidylester, wie die Glycidylester der KOCH-Säuren, erwähnt. Die Mengenverhältnisse werden dabei so gewählt, daß das Reaktionsprodukt 2 NH-Gruppen aufweist. Vorteilhaft wird die Monoglycidyl-bzw. Monoepoxidverbindung in einem Überschuß von 2 bis 6 Gew.-% pro Mol eingesetzt. Die Reaktion erfolgt in Gegenwart eines reaktionsinerten Lösemittels bei einer Temperatur zwischen 40 und 60°C.

In der nächsten Stufe werden 2 Mol dieses Zwischenproduktes mit 1 Mol einer Diglycidylverbindung bei 40 bis 80°C reagiert. Es resultiert dabei eine Adduktverbindung, die 2 sekundäre Aminogruppen aufweist. Die Produkt sollen eine Glasübergangstemperatur von weniger als -15°C aufweisen, was bei der Auswahl der Rohstoffe für die Modifikatorkomponente zu berücksichtigen ist.

Als Diglycidylverbindungen werden dabei Diepoxidharze vom Typ des Bisphenol A oder F, aliphatische Diepoxidverbindungen auf Polyoxyalkylenglykolbasis oder aromatisch-aliphatische Diepoxidverbindungen, z. B. auf Basis eines polyoxypropylenglykolmodifizierten Bisphenol A eingesetzt. Die Epoxidharze weisen ein Epoxidäquivalentgewicht zwischen 180 und 500 auf. Das so erhaltene Reaktionsprodukt dient als kettenverlängernder Modifikator für die Epoxidharz-Amin-Addukte. Dabei werden 5 bis 30 Gew.-%, vorzugsweise 10 bis 20 Gew.-%, des Modifikators, bezogen auf das Epoxidharz-Amin-Addukt, vorteilhafterweise in einer abgestuften Reaktion zusammen mit primär-tertiären Alkyldiaminen, primären Alkyl- und/oder Alkanolaminen und sekundären Alkyl- und/oder Alkanolaminen zu einem epoxidgruppenfreien Epoxidharz-Amin-Addukt umgesetzt.

Vorteilhafterweise werden 10 bis 50 % der eingesetzten Epoxidäquivalente mit dem Modifikator reagiert. Als Epoxidharze werden in dieser Reaktionsstufe vorzugsweise die Bisphenoldiglycidylether oder Epoxidharze auf Novolakbasis mit Epoxidäquivalentgewichten zwischen 180 und 500 eingesetzt.

Die verbleibenden freien Epoxidgruppen werden mit Aminen, die dem Endprodukt nach Protonierung die notwendige Wasserverdünnbarkeit verleihen, umgesetzt. Zur gleichzeitigen Molekülvergrößerung dienen

dabei primäre Alkyl- oder Alkanolamine oder primär-tertiäre Alkyldiamine, wie beispielsweise die NN-Dialkylaminoalkylenamine. Diese Amine werden zusammen mit sekundären Alkyl- und Alkanolaminen eingesetzt, wobei durch die Wahl der Mengenverhältnisse das Endprodukt keine freien Epoxidgruppen mehr aufweist.

Die erfindungsgemäß hergestellten Epoxidharz-Amin-Addukte weisen ein Molekulargewicht von 4.000 - 16.000 (Gewichtsmittel) bzw. von 1.500 - 3.000 (Zahlenmittel) auf. Ihre Glasübergangstemperatur liegt zwischen + 20 und +45°C. Zur einwandfreien Löslichkeit nach Protonierung ist eine Basizität entsprechend einer Aminzahl von mind. 20 mg KOH/g nötig, was bei der Formulierung des Harzansatzes zu berücksichtigen ist.

Im Anschluß an die Reaktion kann gegebenenfalls das organische Lösemittel unter Vakuum anteilig entfernt werden. Diese Verfahrensstufe kann gegebenenfalls auch nach der partiellen Neutralisation des Ansatzes und Verdünnen mit Wasser erfolgen. Bei diesen Verfahrensvarianten werden Materialien erhalten, welche nur geringe Anteile an organischen Lösemitteln enthalten und damit auch strengen Umweltvorschriften entsprechen (z. B. Low-VOC-Regulations).

Zur Neutralisation sind für die nach dem erfindungsgemäßen Verfahren hergestellten Produkte Säuremengen von 20 bis 45 mMol/100 g Bindemittel (Festharz) erforderlich, um eine für die Praxis der Elektrotauchlackierung geeignete stabile und sedimentationsfreie wäßrige Lösung oder Emulsion zu erhalten. Für die erfindungsgemäßen Produkte werden trotz der relativ hohen Aminzahlen und der hohen Molekulargewichte nur 20 bis 45 mMol/100 g Festharz an Neutralisationsmittel zur Herstellung eines praxisgerecht verdünnbaren Badmaterials benötigt, wobei das Dispergierverhalten durch die erfindungsgemäßen Modifikatoren stark verbessert wird.

Die nach dem erfindungsgemäßen Verfahren hergestellten Bindemittel werden in Kombination mit Vernetzungsmitteln verarbeitet. Dazu können Härtungskomponenten, die durch Umesterungsreaktionen zur Vernetzung führen und die beispielsweise in der EP-B1-00 12 463, DE-A1-33 15 469 oder der AT-PS 372 099 und AT-PS 379 602 beschrieben sind, eingesetzt werden. Ebenso kann auch eine Vernetzung durch blockierte Isocyanate oder Aminoharze, gegebenenfalls unter Verwendung entsprechender Katalysatoren zur Härtung herangezogen werden. Die Einbrenntemperaturen liegen je nach dem eingesetzten Härtungssystem zwischen 140 und 190°C.

Die Herstellung des Badmaterials für die Elektrotauchlackierung, die Pigmentierung, der Neutralisations- und Verdünnungsvorgang sind im übrigen dem Fachmann bekannt und bedürfen keiner näheren Beschreibung. Das gleiche gilt auch für die Beschichtung und die Härtung der abgeschiedenen Filme.

Die folgenden Beispiele erläutern die Erfindung, ohne sie in ihrem Umfang zu beschränken. Alle Angaben in Teilen oder Prozenten beziehen sich, soferne nichts anderes angegeben ist, auf Gewichtseinheiten.

## Herstellung der Modifikatoren

MOD 1 : Zu einer Lösung aus 103 g (1 Mol) Diethylentriamin und 170 g Methoxypropanol werden bei 60°C innerhalb von 2 Stunden 577 g (3,1 Mol) 2-Ethylhexylglycidylether zugegeben und bis zu einem EPA-Wert (siehe unten) von 3,70 und einem Brechungsindex n20/d von 1,4600 reagiert. Anschließend wird bei 60°C innerhalb von 2 Stunden eine Mischung aus 190 g (1Epoxidäquivalent ) eines Bisphenol A-Epoxidharzes (EEW 190) und 48 g Methoxypropanol zugegeben und die Reaktion bis zu einem EPA-Wert von 2,70 und einem Brechungsindex von 1,4790 weitergeführt. Eine Lösung aus 100 g des 80%igen Reaktionsproduktes und 30 g Methoxypropanol weist eine Viskosität (DIN 53211/20°C) von 60 - 80 Sekunden auf.

Die Bestimmung des EPA-Wertes erfolgt in folgender Weise:

## EPA-Wert

(Bestimmung der Summe der Oxiran- und Amingruppen in Milliäquivalenten)

0,2 - 0,4 g Harz werden genau (auf Milligramm) gewogen und in 5 Tropfen Methoxypropanol geschmolzen. Nach Abkühlen werden 25 ml einer Mischung aus Dichlormethan und Eisessig (4:1 Volumsteile) zugegeben und das Harz unter leichtem Erwärmen gelöst. Dann werden bei Zimmertemperatur 0,5 g Tetrabutylammoniumjodid und 3 Tropfen Kristallviolett-Lösung zugegeben. Man titriert mit 0,1 n Perchlorsäure-Lösung in Eisessig von blau-violett nach gras-grün (kein Blauton).

Ein Blindwert (ohne Harz) wird in gleicher Weise bestimmt.

$$\text{EPA-Wert} = \frac{(A - B) \times 0{,}1 \times F}{\text{Einwaage (g)}}$$

A = ml 0,1 n Perchlorsäure für Probe
B = ml 0,1 n Perchlorsäure für Blindwert
F = Faktor der 0,1 n Perchlorsäure-Lösung

Bestimmung des Faktors (F) mit Kaliumhydrogenphthalat.

In einer ERLENMEYER-Flasche werden ca. 200 mg Kaliumhydrogenphthalat (pro analysi) auf 0,1 mg genau eingewogen. Nach Zugabe von 30 ml Eisessig und 3 Tropfen Kristallviolett-Lösung wird mit der ca. 0,1 n Perchlorsäure-Lösung von blau-violett nach gras-grün titriert.

$$F = \frac{W}{C \times 20{,}422}$$

W = Einwaage Kaliumhydrogenphthalat
C = ml der ca. 0,1 n Perchlorsäure-Lösung in Eisessig.

MOD 2 : 116 g (1 Mol) Hexamethylendiamin werden in 212 g Methoxypropanol aufgeschmolzen. Bei 60°C werden 379 g (2,06 Mol) Dodecenoxid zugegeben und 4 Stunden bei 60°C und weitere 2 Stunden bei 80°C reagiert, bis ein EPA-Wert von 2,80 erreicht ist. Nach Zugabe einer Mischung aus 200 g (1 Epoxidäquivalent) eines Polyoxypropylenglykoldiglycidylethers (EEW 200, Handelsbezeichnung DER 736, DOW CHEMICAL) und 77 g Methoxypropanol innerhalb von 2 Stunden bei 60°C wird die Reaktion bis zu einem EPA-Wert von 2,30 weitergeführt. Eine Lösung von 100 g des 70%igen Harzes und 10 g Methoxypropanol weist eine Viskosität /DIN 53211/20°C) von 90- 110 Sekunden auf.

MOD 3 : Zu 103 g (1 Mol) Diethylentriamin und 170 g Methoxypropanol werden innerhalb von 2 Stunden bei 60°C 577 g (3,1 Mol) 2-Ethylhexylglycidylether zugegeben und bis zu einem EPA-Wert von 3,53 bei dieser Temperatur reagiert. Anschließend wird eine Mischung aus 87 g Methoxypropanol und 350 g (1 Epoxidäquivalent) eines Diepoxidharzes auf Basis eines polyoxypropylenglykolmodifizierten Bisphenol A (BPP 350, SANYO CHEMICAL) innerhalb von 2 Stunden bei 60°C zugegeben und die Reaktion bis zu einem EPA-Wert von 2,33 weitergeführt.

Eine Lösung von 100 g des 80%igen Harzes und 30 g Methoxypropanol weist eine Viskosität (DIN 53211/20°C) von 60 - 70 Sekunden auf.

MOD 4 : Zu einer Lösung von 400 g (1 Mol) eines Polyoxypropylendiamins (JEFFAMIN (R) D 400, TEXACO CHEM. COMP.) in 198 g Methoxypropanol werden innerhalb von 2 Stunden bei 60°C 391 g (2,1 Mol) 2-Ethylhexylglycidylether zugegeben und bis zu einem EPA-Wert von 2,02 reagiert. Anschließend wird eine Lösung von 475 g (1 Epoxidäquivalent) eines Bisphenol A-Diepoxidharzes (EEW 475) in 119 g Methoxypropanol innerhalb von 2 Stunden bei 60°C zugegeben und die Reaktion bis zu einem EPA-Wert von 1,20 weitergeführt. Eine Lösung von 100 g des 80%igen Harzes und 40 g Methoxypropanol weist eine Viskosität (DIN 53211/20°C) von 110 Sekunden auf.

MOD 5: Zu 103 g (1 Mol) Diethylentriamin und 165 g Methoxypropanol werden innerhalb von 2 Stunden bei 60°C 558 g (3,0 Mol) 2-Ethylhexylglycidylether zugegeben und bis zu einem EPA-Wert von 3,63 reagiert. Anschließend wird eine Mischung aus 50 g Methoxypropanol und 200 g (1 Epoxidäquivalent) eines Polyoxypropylenglykoldiglycidylether (Handelsprodukt DER 736, DOW CHEMICAL) innerhalb von 2 Stunden zugegeben und die Reaktion bei 60°C bis zu einem EPA-Wert von 2,78 weitergeführt. Das Produkt weist einen Festharzgehalt von 80 Gew.-% und einen Brechungsindex n 20/d von 1,463 auf.

MOD 6: Zu einer Lösung aus 104 g (1 Mol) Aminoethylethanolamin und 119 g Methoxypropanol werden bei 60°C innerhalb von 2 Stunden 372 g (2 Mol) Ethylhexylglycidylether zugegeben und die Reaktion bis zu einem EPA-Wert von 3,36 weitergeführt. Das Endprodukt weist einen Festharzgehalt von 80 Gew.-% und einen Brechungsindex n 20/d von 1,4581 auf.

Beispiel 1:

In einem geeigneten Reaktionsgefäß werden 326 g MOD 1 (entsprechend 0,3 NH-Äquivalenten), 570 g (3,0 Epoxidäquivalente) eines Bisphenol A-Diepoxidharzes (EEW 190), 96,8 g (1,5 NH-Äquivalente), 2-Ethylhexylamin und 167 g Methoxypropanol bei 60 ° C in einer ersten Reaktionsstufe bis zum vollständigen Umsatz der NH-Funktionalität, d. h. bis zu einem EPA-Wert von 2,15 reagiert. Anschließend werden 1330 g (2,1 Epoxidäquivalente) einer 75%igen Lösung in Methoxypropanol eines Bisphenol A-Diepoxidharzes (EEW 475) und 189 g (1,8 NH-Äquivalente) Diethanolamin zugegeben und wieder bis zum Umsatz der NH-Funktionalität, d. h. bis zu einem EPA-Wert von 1,60 reagiert. In einer 3. Reaktionsstufe werden die restlichen Oxirangruppen mit 78 g (1,2 NH-Äquivalente) N,N-Diethylaminopropylamin 2 Stunden bei 60 ° C, sowie eine weitere Stunde bei 90 ° C und 3 weitere Stunden bei 120 ° C bis zu einem EPA-Wert von 1,45 umgesetzt, und mit Methoxypropanol auf einen Festharzgehalt von 65 Gew.-% verdünnt. Die Viskosität (DIN 53211/20 ° C) einer mit Methoxypropanol auf einen Festharzgehalt von 46 Gew.-% verdünnten Harzlösung beträgt 170 Sekunden. Die aus Gelchromatogrammen ermittelten Gewichts- bzw. Zahlenmittel betragen: Mw = 6800 Mn = 2060.

Beispiele 2 - 8:

In gleicher Weise wie in Beispiel 1 angegeben, werden die in der Tabelle 1 zusammengefaßten Ansätze reagiert. Die Kennwerte für die Reaktionsprodukte finden sich ebenfalls in dieser Tabelle.

In Reaktionsstufe 4 wird derart verfahren, daß im Anschluß an Stufe 3 bei 120 ° C die entsprechende Menge an Methoxypropanol und eines Polyoxypropylenglykoldiglycidylethers (EEW 200, Handelsbezeichnung DER 736, DOW CHEMICAL) zugegeben werden und 3 bis 5 Stunden bei dieser Temperatur bis zum Erreichen des EPA-Wertes reagiert werden.

Tabelle 1 (Mengenangaben in g, in Klammer Angabe der Äquivalente)

| Beispiel | 1 | 2 | 3 | 4 |
|---|---|---|---|---|
| Stufe 1 | | | | |
| MOD 1 Lösung 80%ig | 326 (0,3) | - | - | - |
| MOD 2 - Lösung 70%ig | - | 578 (0,6) | - | - |
| MOD 3 - Lösung 80%ig | - | - | 772 (0,6) | - |
| MOD 4 - Lösung 80%ig | - | - | - | 1583 (1,0) |
| Epoxidharz EEW 190 | 570 (3,0) | 570 (3,0) | 570 (3,0) | 570 (3,0) |
| 2-Ethylhexylamin | 96,8 (1,5) | 32,3 (0,5) | 77,4 (1,2) | - |
| Methoxypropanol | 167 | 151 | 162 | 143 |
| EPA-Wert nach Stufe 1 | 2,15 | 2,30 | 1,99 | 1,47 |
| Stufe 2 | | | | |
| Epoxidharz EEW 475 (75%ige Lösung in Methoxypropanol) | 1330 (2,1) | 887 (1,4) | 1330 (2,1) | 887 (1,4) |
| Diethanolamin | 189 (1,8) | 189 (1,8) | 189 (1,8) | 189 (1,8) |
| EPA-Wert nach Stufe 2 | 1,60 | 1,77 | 1,63 | 1,37 |
| Stufe 3 | | | | |
| N,N-Diethylaminopropylamin | 78 (1,2) | 78 (1,2) | 78 (1,2) | 78 (1,2) |
| Kennwerte der Reaktionsprodukte: EPA-Wert | 1,45 | 1,60 | 1,49 | 1,23 |
| Festharzgehalt (30 Minuten / 120°C) | 65 % | 65 % | 65 % | 65 % |
| Viskosität DIN 53211/20°C 100 g 65%ige Harzlösung und 40 g Methoxypropanol | 170 s | 124s | 160 s | 180 s |
| GPC, Ultrastyragel BCD | | | | |
| Mw | 6800 | 4360 | 8452 | 9806 |
| Mn | 2060 | 1880 | 1431 | 2100 |

Fortsetzung Tabelle 1

| Beispiel | 5 | 6 | 7 | 8 |
|---|---|---|---|---|
| Stufe 1 | | | | |
| MOD 1 - Lösung 80%ig | 490 (0,45) | 650 (0,6) | -- | 325 (0,3) |
| MOD 5 - Lösung 80%ig | -- | -- | 323 (0,3) | -- |
| Epoxidharz EEW 190 | 1140 (6,0) | 722 (3,8) | 380 (2,0) | 380 (2,0) |
| 2-Ethylhexylamin | 193,5 (1,5) | 122,6 (0,95) | 64,5 (0,5) | 64,5 (0,5) |
| Methoxypropanol (MP) | 740 | 455 | 238 | 237 |
| EPA-Wert nach Stufe 1 | 2,19 | 2,08 | 2,99 | 2,09 |
| Stufe 2 | | | | |
| Methoxypropanol | 477 | 268 | 187 | 223 |
| Epoxidharz EEW 475 (75%ige Lösung in Methoxypropanol) | 407 (0,6) | 1837 (2,9) | 1647 (2,6) | 1647 (2,6) |
| MOD 6 - Lösung 80%ig | -- | 952 (1,6) | -- | 536 (0,9) |
| Monoethanolamin | 67,5 (0,9) | -- | 67,5 (0,9) | 67,5 (0,9) |
| N,N-Diethanolamin | 94,5 (0,9) | -- | 94,5 (0,9) | -- |
| EPA-Wert nach Stufe 2 | 1,71 | 1,71 | 1,74 | 1,61 |
| Stufe 3 | | | | |
| MP | 33,4 | 61,3 | 33,4 | 33 |
| N,N-Diethylaminopropylamin | 78 (0,6) | 143 (1,1) | 78 (0,6) | 78 (0,6). |
| EPA-Wert nach Stufe 3 | 1,61 | 1,56 | 1,56 | 1,56 |
| Stufe 4 | | | | |
| Methoxypropanol | -- | -- | 49,3 | 57 |
| Epoxidharz EEW 200 | -- | -- | 115 (0,575) | 132 (0,66) |
| EPA-Wert nach Stufe 4 | -- | -- | 1,58 | 1,40 |
| Festharzgehalt (30 Minuten /120°C) | 70 % | 65 % | 70 % | 70 % |
| Viskosität DIN 53211/20°C | 84 g Hzlsg + 56 g MP 50 s | 84 g Hzlsg. + 56 g MP 85 s | 80 g Hzlsg + 60 g MP 71 s | 80 g Hzlsg + 60 g MP 152 s |
| GPC, Ultrastyragel BCD | | | | |
| Mw Gewichtsmittel | 10739 | 14132 | 12078 | 15832 |
| Mn Zahlenmittel | 1910 | 2670 | 2207 | 2772 |

Vernetzungskomponente VK 1

In einem Reaktionsgefäß mit einer für das Azeotropverfahren geeigneten Einrichtung und einer Glockenbodenkolonne zur Abtrennung der bei der partiellen Umesterung gebildeten Alkoholkomponente werden zu einer Mischung aus 160 g (1 Mol) Malonsäurediethylester, 0,34 g (0,004 Mol) Piperidin und 0,22 g (0,004 Mol) Ameisensäure 85 % bei 80 °C 29,7 g (0,9 Mol) Paraformaldehyd 91 % portionsweise so zugegegeben, daß bei Einsetzen der exothermen Reaktion eine Temperatur von 95 °C nicht überschritten wird. Das Reaktionsgemisch wird bei 95 °C gerührt, bis der Paraformaldehyd vollständig gelöst ist. Die Temperatur wird unter einsetzender Wasserabspaltung innerhalb von 2 Stunden auf 110 °C erhöht. Nach Erreichen von 110 °C werden mit Spezialbenzin (Siedebereich 80 - 120 °C) als Schleppmittel insgesamt 9 g Wasser

abdestilliert. Unter Anlegen von Vakuum wird anschließend das eingesetzte Schleppmittel entfernt.

Nach Zugabe von 22,8 g (0,3 Mol) Propylenglykol-1,2 wird der Ansatz bis zum Destillationsbeginn (140 - 150 °C) erhitzt. Bei steigender Temperatur werden 27 Tle (0,6 Mol) Ethanol abdestilliert. Das erhaltene Produkt weist einen Festharzgehalt (120 °C, 30 Minuten) von ca. 92 % , eine OH-Zahl unter 5 mg KOH/g, eine Grenzviskositätszahl von ca. 5,2 ml/g (20 °C, Dimethylformamid) und einen Brechungsindex n 20/d von 1,4670 auf.

Vernetzungskomponente VK 2

480 g (3 Mol) Malonsäurediethylester und 134 g (1 Mol) Trimethylolpropan werden auf 130 °C erwärmt. Unter Kontrolle des Brechungsindex des Destillates werden mit allmählichem Temperaturanstieg bis 165 °C 135 g Ethanol als Destillat abgetrennt.

Anschließend werden unter steigendem Vakuum bei 160 °C weiter flüchtige Komponenten abdestilliert, bis der Feststoffgehalt der Reaktionsmasse (120 °C, 30 Minuten) 95 % beträgt. Das erhaltene Produkt weist eine OH-Zahl unter 5 mg KOH/g und einen Brechungsindex von n 20/d 1,4660 auf.

Vernetzungskomponente VK 3

Entsprechend dem bei VK 1 beschriebenem Verfahren werden eine Mischung aus 134,4 g (0,84 Mol) Malonsäurediethylester, 0,286 g (0,0034 Mol) Piperidin und 0,185 g (0,0034 Mol) Ameisensäure 85 % mit 13,86 g (0,42 Mol) Paraformaldehyd 91%ig umgesetzt, wobei insgesamt 9,24 g (0,51 Mol) Wasser abdestilliert werden. Das Produkt weist einen Festkörpergehalt von 78 % (120 °C, 30 Minuten) auf. Der Brechungsindex ergibt einen Wert von n 20/d = 1,437.

Anschließend werden 134 g (1 Mol) Trimethylolpropan zugegeben und bis zum Destillationsbeginn (140 - 150 °C) erhitzt. Bei steigender Temperatur werden 23 g (0,5 Mol) Ethanol abdestilliert. Nach Erreichen der Destillatmenge wird mit 263 g Diethylenglykoldimethylether (DGDME) verdünnt und auf 30 °C gekühlt. Bei 30 °C werden innerhalb von 6 Stunden 800 g (2,5 Mol bzw. 2,5 NCO-Äquivalente) eines Reaktionsproduktes aus 2,5 Mol Toluylendiisocyanat (handelsübliches Isomerengemisch) und 2,5 Mol Ethylenglykolmonohexylether zugegeben. In weiteren 4 Stunden wird die Temperatur auf 100 °C erhöht und bei dieser Temperatur bis zu einem NCO-Gehalt unter 0,01 Milliäquivalente pro g Probe reagiert.

Das erhaltene Produkt mit einem Festharzgehalt von 80 % (120 °C, 30 Minuten) weist einen Brechungsindex n 20/d von 1,507 und eine Viskosität (10 g Harzlösung + 4 g DGDME) von E - F (Gardner-Holdt) auf.

Prüfung der Produkte gemäß Beispiel 1 - 8 in kathodisch abscheidbaren Lacken

Die erfindungsgemäß hergestellten Produkte werden in den in der Tabelle 2 angegebenen Verhältnissen mit einer Vernetzungskomponente in 70%iger Lösung in Methoxypropanol reagiert. Aus diesen Bindemittel-Lösungen werden entsprechend der Formulierung

| | |
|---|---|
| 100 | Tle Bindemittel (Festharz) |
| 36,5 | Tle Titandioxid |
| 3 | Tle Bleisilikat |
| 0,5 | Tle Farbruß |

in üblicher Weise Farbpasten hergestellt, welche nach Protonisierung mit der in Tabelle 2 angegebenen Säuremenge mit deionisiertem Wasser auf einen Festkörpergehalt von 18 % verdünnt werden.

Als Katalysator für die Härtung wurde Blei in Form des Bleioktoates in einer Menge von 1 Tl Blei (Metallgehalt) auf 100 Tle Bindemittel-Festharz eingesetzt.

Die Abscheidung erfolgt auf zinkphosphatierten Stahlblechen bei einer Badtemperatur von 28 °C und einer Beschichtungszeit von 2 Minuten. Die derart beschichteten Bleche wurden anschließend für 30 Minuten bei 160 °C eingebrannt. Die Prüfergebnisse sind in Tabelle 3 zusammengefaßt.

Tabelle 2

| Bindemittelkombination | Vernetzungskomponente VK | Tle Festharz ex Beispiel | Reaktionsbedingungen Basisharz/VK | Neutralisationsmittelbedarf in Millimol Ameisensäure pro 100 g Festharz |
|---|---|---|---|---|
| 1 | 30 Tle VK 1 | 70 Tle Bsp. 1 | 2 Stden. 120 °C | 30 |
| 2 | 20 Tle VK 2 | 80 Tle Bsp. 2 | 1 Stde. 100 °C | 25 |
| 3 | 20 Tle VK 3 | 80 Tle Bsp. 3 | 30 Min. 60 °C | 35 |
| 4 | 25 Tle VK 2 | 75 Tle Bsp. 4 | 1 Stde. 120 °C | 35 |
| 5 | 25 Tle VK 1 | 75 Tle Bsp. 5 | 2 Stden. 100 °C | 30 |
| 6 | 30 Tle VK 3 | 70 Tle Bsp. 6 | 1 Stde. 90 °C | 35 |
| 7 | 30 Tle VK 2 | 70 Tle Bsp. 7 | 3 Stden. 120 °C | 30 |
| 8 | 20 Tle VK 1 | 80 Tle Bsp. 8 | 1 Stde. 120 °C | 30 |

Tabelle 3

| Bindemittelkombination | Abscheidung Volt | Schichts tärke µm | Flächenqualität Roughness Ra [1] in Mikrometer | Salzsprühtest ASTM B-117-64 in Stunden [2] |
|---|---|---|---|---|
| 1 | 390 | 36 | 0,24 | über 1000 |
| 2 | 360 | 28 | 0,28 | 920 |
| 3 | 360 | 30 | 0,30 | über 1000 |
| 4 | 330 | 26 | 0,26 | 920 |
| 5 | 390 | 30 | 0,20 | über 1000 |
| 6 | 390 | 28 | 0,25 | über 1000 |
| 7 | 330 | 34 | 0,28 | 920 |
| 8 | 390 | 36 | 0,21 | über 1000 |

[1] Die Roughness Werte wurden mit dem Gerät "Surftest 201" der Firma Mitutoyo gemessen
[2] bis zur angegebenen Stundenanzahl ist der Angriff am Kreuzschnitt unter 2 mm

**Patentansprüche**

**Patentansprüche für folgende Vertragsstaaten : BE, DE, FR, GB, IT, NL, SE**

1. Kathodisch abscheidbare Lackbindemittel auf der Basis von modifizierten Epoxidharz-Amin-Addukten, dadurch gekennzeichnet, daß sie 5 bis 30 Gew.-%, vorzugsweise 10 bis 20 Gew.-% , bezogen auf das modifizierte Epoxidharz-Amin-Addukt, eines Modifikators der allgemeinen Formel

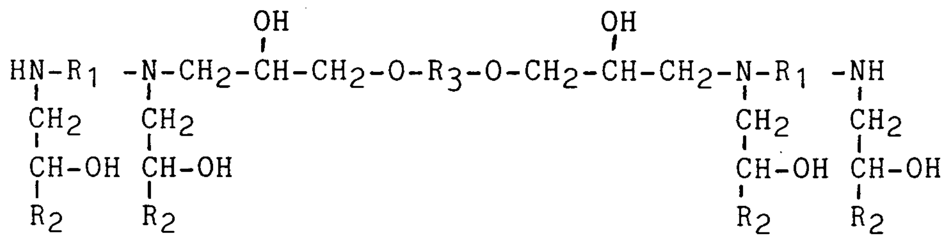

enthalten, wobei

$R_1$ gleiche oder verschiedene Reste $-C_nH_{2n}-$ oder

$-(C_nH_{2n}O)_m-C_nH_{2n}-$ oder

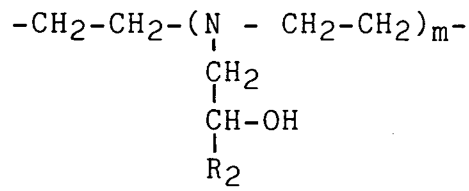

$R_2$ gleiche oder verschiedene Reste $-C_nH_{2n+1}$ oder

$-O-C_nH_{2n+1}$

$R_3$ einen Rest

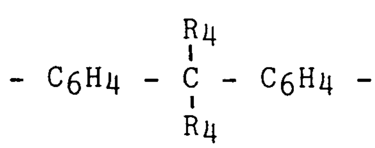

oder

$-(C_nH_{2n}O)_m-$ oder

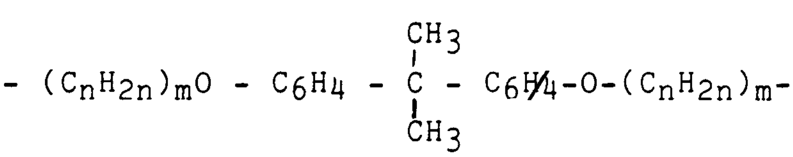

$R_4$ ein Wasserstoffatom oder einen Methylrest, n und m ganze Zahlen zwischen 2 und 8 und im Falle von $R_2$ n ganze Zahlen zwischen 8 und 20 bedeuten, und

welcher mit mindestens 2 Mol eines Diepoxidharzes oder Polyepoxidharzes und primär-tertiären Diaminen und primären und/oder sekundären Alkyl- und/oder Alkanolaminen zu einem epoxidgruppenfreien, nach Neutralisation mit Säuren wasserverdünnbaren Epoxidharz-Amin-Addukt mit einem Molekulargewicht von 4000 bis 16.000 (Gewichtsmittel) bzw. von 1.500 - 3.000 (Zahlenmittel), einer Glasübergangstemperatur von +20 bis +45°C und einer Aminzahl von mindestens 20 mg KOH/g umgesetzt wurde.

**2.** Verfahren zur Herstellung von kathodisch abscheidbaren Lackbindemitteln auf der Basis von modifizierten Epoxidharz-Amin-Addukten, dadurch gekennzeichnet,daß man
(A) ein diprimäres aliphatisches Di- oder Polyamin mit einer aliphatischen Monoglycidyl- und/oder Monoepoxidverbindung, deren aliphatischer Rest 8 bis 20 C-Atome aufweist, bei 40 - 60°C in Gegenwart eines reaktionsinerten Lösemittels in solchen Mengenverhältnissen umsetzt, daß das Reaktionsprodukt 2 sekundäre Aminogruppen aufweist,
(B) 2 Mol dieses Zwischenproduktes bei 40 - 80°C mit 1 Mol einer Diglycidylverbindung reagiert und
(C)5 bis 30 Gew.-%, vorzugsweise 10 bis 20 Gew.-%, bezogen auf das modifizierte Epoxidharz-Amin-Addukt, dieses Modifikators (AB), welcher pro Molekül 2 sekundäre Aminogruppen, sowie eine Glasübergangstemperatur von weniger als -15°C aufweist, mit Di- oder Polyepoxidharzen, sowie primär-tertiären Diaminen und primären und/oder sekundären Alkyl- und/oder Alkanolaminen zu einem epoxidgruppenfreien, nach Neutralisation mit Säuren wasserverdünnbaren Epoxidharz-Amin-Addukt mit einem Molekulargewicht von 4.000 - 16.000 (Gewichtsmittel) bzw. 1.500 - 3.000 (Zahlenmittel), einer Glasübergangstemperatur von +20 bis +45°C und einer Aminzahl von mindestens 20 mg KOH/g umsetzt.

**3.** Verfahren nach Anspruch 2, dadurch gekennzeichnet, daß man als diprimäres aliphatisches Polyamin Diethylentriamin einsetzt.

**4.** Verwendung der Lackbindemittel nach Anspruch 1 zur Formulierung von Elektrotauchlacken.

**Patentansprüche für folgenden Vertragsstaat : ES**

**1.** Verfahren zur Herstellung von kathodisch abscheidbaren Lackbindemitteln auf der Basis von modifizierten Epoxidharz-Amin-Addukten, dadurch gekennzeichnet,daß man
(A) ein diprimäres aliphatisches Di- oder Polyamin mit einer aliphatischen Monoglycidyl- und/oder Monoepoxidverbindung, deren aliphatischer Rest 8 bis 20 C-Atome aufweist, bei 40 - 60°C in Gegenwart eines reaktionsinerten Lösemittels in solchen Mengenverhältnissen umsetzt, daß das Reaktionsprodukt 2 sekundäre Aminogruppen aufweist,
(B) 2 Mol dieses Zwischenproduktes bei 40 - 80°C mit 1 Mol einer Diglycidylverbindung reagiert und
(C)5 bis 30 Gew.-%, vorzugsweise 10 bis 20 Gew.-%, bezogen auf das modifizierte Epoxidharz-Amin-Addukt, dieses Modifikators (AB), welcher pro Molekül 2 sekundäre Aminogruppen, sowie eine Glasübergangstemperatur von weniger als -15°C aufweist, mit Di- oder Polyepoxidharzen, sowie primär-tertiären Diaminen und primären und/oder sekundären Alkyl- und/oder Alkanolaminen zu einem epoxidgruppenfreien, nach Neutralisation mit Säuren wasserverdünnbaren Epoxidharz-Amin-Addukt mit einem Molekulargewicht von 4.000 - 16.000 (Gewichtsmittel) bzw. 1.500 - 3.000 (Zahlenmittel), einer Glasübergangstemperatur von +20 bis +45°C und einer Aminzahl von mindestens 20 mg KOH/g umsetzt.

**2.** Verfahren nach Anspruch 2, dadurch gekennzeichnet, daß man als diprimäres aliphatisches Polyamin Diethylentriamin einsetzt.

**3.** Verwendung der Lackbindemittel nach Anspruch 1 zur Formulierung von Elektrotauchlacken.

**Claims**
**Claims for the following Contracting States : BE, DE, FR, GB, IT, NL, SE**

**1.** Cathodically depositable paint binders based on modified epoxy resins/amine adducts, characterised in that they contain 5 to 30% by weight, preferably 10 to 20% by weight, based on the modified epoxy resin/amine adduct, of a modifier of general formula

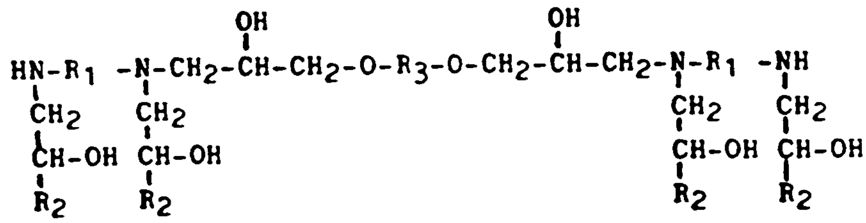

wherein

$R_1$ represents identical or different groups

$-C_nH_{2n}-$ or

$-(C_nH_{2n}O)_m-C_nH_{2n}-$ or

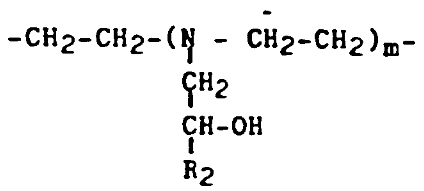

$R_2$ represents identical or different groups

$-C_nH_{2n+1}$ or

$-O-C_nH_{2n+1}$

$R_3$ represents a group

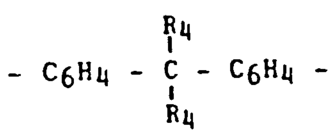

or

$-(C_nH_{2n}O)_m-$ or

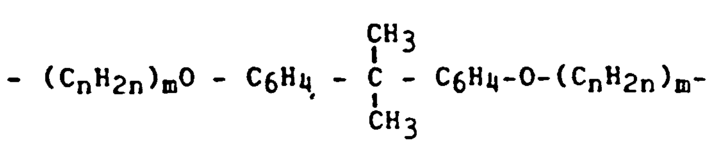

$R_4$ represents a hydrogen atom or a methyl group, n and m are integers between 2 and 8 and, in the case of $R_2$, n represents between 8 and 20, and which has been reacted with at least 2 mol of a diepoxy resin or polyepoxy resin and primary-tertiary diamines and primary and/or secondary alkyl- and/or alkanolamines to form an epoxy resin/amine adduct which is free from epoxide groups, water-dilutable after neutralisation with acids and has a molecular weight of 4,000 to 16,000 (by the weight method) or 1,500 to 3,000 (by the counting method), a glass transition temperature of +20 to +45 °C and an amine number of at least 20 mg KOH/g.

**2.** Process for preparing cathodically depositable paint binders based on modified epoxy resin/amine adducts, characterised in that

(A) a diprimary aliphatic di- or polyamine is reacted with an aliphatic monoglycidyl and/or monoepoxide compound the aliphatic group of which contains 8 to 20 carbon atoms, at 40 to 60 °C in the presence of a solvent inert in the reaction, in quantities such that the reaction product has two

secondary amino groups,
(B) 2 mol of this intermediate product are reacted at 40 to 80 °C with 1 mol of a diglycidyl compound and
(C) 5 to 30% by weight, preferably 10 to 20% by weight, based on the modified epoxy resin/amine adduct, of this modifier (AB), which contains, per molecule, 2 secondary amino groups and has a glass transition temperature of less than -15 °C, are reacted with di- or polyepoxy resins, and primary-tertiary diamines and primary and/or secondary alkyl- and/or alkanolamines to form an epoxy resin/amine adduct which is free from epoxide groups and water-dilutable after neutralisation with acids and has a molecular weight of 4,000 to 16,000 (weight method) or 1,500 to 3,000 (counting method), a glass transition temperature of +20 to +45 °C and an amine number of at least 20 mg KOH/g.

**3.** Process according to claim 2, characterised in that diethylene triamine is used as the diprimary aliphatic polyamine.

**4.** Use of the paint binders according to claim 1 for formulating electrodeposition paints.

**Claims for the following Contracting State : ES**

**1.** Process for preparing cathodically depositable paint binders based on modified epoxy resin/amine adducts, characterised in that
(A) a diprimary aliphatic di- or polyamine is reacted with an aliphatic monoglycidyl and/or monoepoxide compound the aliphatic group of which contains 8 to 20 carbon atoms, at 40 to 60 °C in the presence of a solvent inert in the reaction, in quantities such that the reaction product has two secondary amino groups,
(B) 2 mol of this intermediate product are reacted at 40 to 80 °C with 1 mol of a diglycidyl compound and
(C) 5 to 30% by weight, preferably 10 to 20% by weight, based on the modified epoxy resin/amine adduct, of this modifier (AB), which contains, per molecule, 2 secondary amino groups and has a glass transition temperature of less than -15 °C, are reacted with di- or polyepoxy resins, and primary-tertiary diamines and primary and/or secondary alkyl- and/or alkanolamines to form an epoxy resin/amine adduct which is free from epoxide groups and water-dilutable after neutralisation with acids and has a molecular weight of 4,000 to 16,000 (weight method) or 1,500 to 3,000 (counting method), a glass transition temperature of +20 to +45 °C and an amine number of at least 20 mg KOH/g.

**2.** Process according to claim 2, characterised in that diethylene triamine is used as the diprimary aliphatic polyamine.

**3.** Use of the paint binders according to claim 1 for formulating electrodeposition paints.

**Revendications**
**Revendications pour les Etats contractants suivants : BE, DE, FR, GB, IT, NL, SE**

**1.** Liants de peinture déposables à la cathode à base de produits d'addition résine époxydique-amine modifiés, caractérisés en ce qu'ils contiennent 5 à 30% en poids, de préférence 10 à 20% en poids, par rapport au produit d'addition résine époxydique-amine modifié, d'un modificateur de formule générale

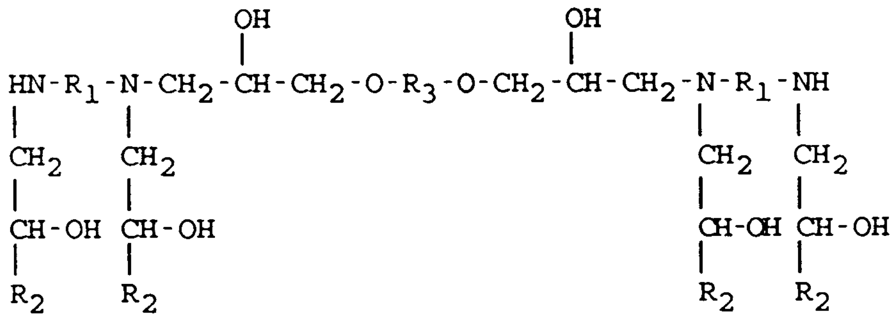

dans laquelle
$R_1$ représente des restes $-C_nH_{2n}-$ ou
$-(C_nH_{2n}O)_m-C_nH_{2n}-$ ou

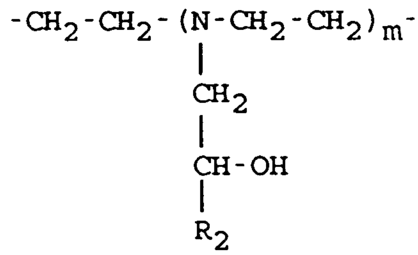

identiques ou différents,
$R_2$ représente des restes $-C_nH_{2n+1}$ ou
$-O-C_nH_{2n+1}$
identiques ou différents
$R_3$ représente un reste

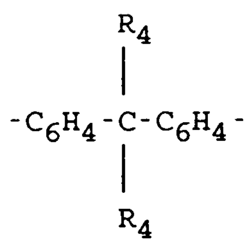

ou
$-(C_nH_{2n}O)_m-$ ou

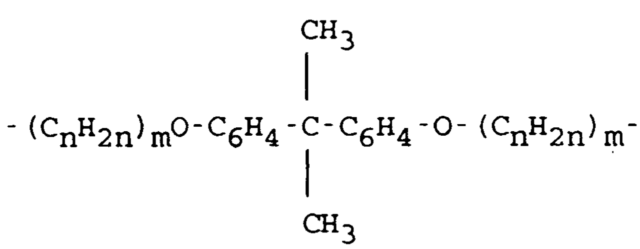

$R_4$ représente un atome d'hydrogène ou un reste méthyle,
n et m représentent des nombres entiers compris entre 2 et 8 et, dans le cas de $R_2$, n représente des nombres entiers compris entre 8 et 20, et

qui a réagi avec au moins 2 moles d'une résine diépoxydique ou d'une résine polyépoxydique et des diamines primaires-tertiaires et des alkyl- et/ou alcanolamines primaires et/ou secondaires pour donner un produit d'addition résine époxydique-amine exempt de groupes époxyde, diluable à l'eau après neutralisation avec des acides, présentant un poids moléculaire de 4000 à 16000 (moyen en poids) ou de 1500 à 3000 (moyen en nombre), une température de transition vitreuse de +20 à +45°C et un indice d'amine d'au moins 20 mg de KOH/g.

**2.** Procédé de préparation de liants de peinture déposables à la cathode à base de produits d'addition résine époxydique-amine modifiés, caractérisé en ce que
(A) on fait réagir une di- ou polyamine aliphatique diprimaire avec un composé monoglycidylique et/ou monoépoxydique aliphatique dont le reste aliphatique présente 8 à 20 atomes de carbone, à 40-60°C en présence d'un solvant inerte vis à vis de la réaction dans des proportions telles que le produit de réaction contient deux groupes amines secondaires,
(B) on fait réagir 2 moles de ce produit intermédiaire avec une mole d'un composé diglycidylique à 40-80°C et
(C) on fait réagir 5 à 30% en poids, de préférence 10 à 20% en poids, par rapport au produit d'addition résine époxydique-amine modifié, de ce modificateur (AB), qui contient par molécule 2 groupes amines secondaires et qui présente une température de transition vitreuse inférieure à -15°C, avec des résines di- ou polyépoxydiques, ainsi qu'avec des diamines primaires-tertiaires et des alkyl-et/ou alcanolamines primaires et/ou secondaires pour former un produit d'addition résine époxydique-amine exempt de groupes époxyde, diluable à l'eau après neutralisation avec des acides, d'un poids moléculaire de 4000 - 16000 (moyen en poids) ou de 1500-3000 (moyen en nombre), d'une température de transition vitreuse de +20°C à +45°C et d'un indice d'amine d'au moins 20 mg de KOH/g.

**3.** Procédé selon la revendication 2, caractérisé en ce que l'on utilise la diéthylènetriamine comme polyamine aliphatique diprimaire.

**4.** Utilisation des liants de peinture selon la revendication 1 pour la formulation de peintures pour trempage électrophorétique.

**Revendications pour l'Etat contractant suivant : ES**

**1.** Procédé de préparation de liants de peinture déposables à la cathode à base de produits d'addition résine époxydique-amine modifiés, caractérisé en ce que
(A) on fait réagir une di- ou polyamine aliphatique diprimaire avec un composé monoglycidylique et/ou monoépoxydique aliphatique dont le reste aliphatique présente 8 à 20 atomes de carbone, à 40-60°C en présence d'un solvant inerte vis à vis de la réaction dans des proportions telles que le produit de réaction contient deux groupes amines secondaires,
(B) on fait réagir 2 moles de ce produit intermédiaire avec une mole d'un composé diglycidylique à 40-80°C et
(C) on fait réagir 5 à 30% en poids, de préférence 10 à 20% en poids, par rapport au produit d'addition résine époxydique-amine modifié, de ce modificateur (AB), qui contient par molécule 2 groupes amines secondaires et qui présente une température de transition vitreuse inférieure à -15°C, avec des résines di- ou polyépoxydiques, ainsi qu'avec des diamines primaires-tertiaires et des alkyl- et/ou alcanolamines primaires et/ou secondaires pour former un produit d'addition résine époxydique-amine exempt de groupes époxyde, diluable à l'eau après neutralisation avec des acides, d'un poids moléculaire de 4000 - 16000 (moyen en poids) ou de 1500-3000 (moyen en nombre), d'une température de transition vitreuse de +20°C à +45°C et d'un indice d'amine d'au moins 20 mg de KOH/g.

**2.** Procédé selon la revendication 1, caractérisé en ce que l'on utilise la diéthylènetriamine comme polyamine aliphatique diprimaire.

**3.** Utilisation des liants de peinture selon la revendication 1 pour la formulation de peintures pour trempage électrophorétique.